**Europäisches Patentamt**

**European Patent Office**

**Office européen des brevets**

(11) Publication number: **0 160 477**
**B1**

## (12) EUROPEAN PATENT SPECIFICATION

(45) Date of publication of patent specification: **18.07.90**

(21) Application number: **85302792.8**

(22) Date of filing: **22.04.85**

(51) Int. Cl.⁵: **A 01 M 7/00, B 05 B 1/28**

(54) Liquid spraying device.

(30) Priority: **24.04.84 GB 8410418**

(43) Date of publication of application:
**06.11.85 Bulletin 85/45**

(45) Publication of the grant of the patent:
**18.07.90 Bulletin 90/29**

(84) Designated Contracting States:
**AT BE CH DE FR GB IT LI LU NL SE**

(56) References cited:
**DE-C- 660 924**
**FR-A-2 341 266**
**FR-A-2 526 330**

**POWER FARMING, vol. 60, no. 5, 1st May 1981,
page 63, Sutton, Surrey, GB; "Revolutionary
sprayer"**

(73) Proprietor: **HORSTINE FARMERY LIMITED
North Newbald
York YO4 3SP (GB),**

(72) Inventor: **Peck, Arthur George Edward
3 Wood Drive
North Ferriby North Humberside (GB)**

(74) Representative: **Jones, Colin et al
H.L. Cottrell & Co. Suite 1, Kings Building South
Church Side
Hull North Humberside HU1 1RR (GB)**

Courier Press, Leamington Spa, England.

## Description

The present invention relates to a liquid spraying device.

Devices are known for breaking up a continuum or body of liquid to form droplets, and spraying the droplets thus formed onto a surface. In particular, such devices are known for spraying a liquid chemical, for example, containing a herbicide a pesticide or plant growth or preservative agent, onto selected areas, which may vary considerably in size, for the purpose of weed or pest control or of optimising crop yield.

Existing devices, however, provide poor control of spread of the spray and of dosage rate, and this leads to considerable waste of the material being sprayed.

Known types of such devices employ a rotating disc to break-up a stream of liquid supplied thereto and spray it over an arc of 360°. On translation of the device over the surface being sprayed, a band of the surface is sprayed; and the width of the band is varied by changing disc speed and flowrate thereto. This, however, produces a change in droplets size and this affects distribution. Other types use flow deflectors, as cited in the document FR—A—2 341 266. In any event, the device gives rise to erratic and uneven deposition of the droplets on the surface. Other similar devices are known in which change in the width of the spray entails a change in the direction thereof; and this again affects dosage rate.

It is an object of the present invention to provide a liquid spraying device in which the spread and dosage rate can be more closely controlled.

There is provided by the present invention a liquid spraying device comprising means for forming a spray of droplets of the liquid, means for delivering liquid to said spray forming means at a predetermined rate, a masking arrangement positionable to interrupt said spray, said masking arrangement being adjustable to interrupt a greater or lesser part of said spray, said masking arrangement comprising two members relatively movable away from and towards one another to interrupt a greater or lesser part of the spray respectively, and means for so relatively moving said members such that they are moved together and by the same amount so that a relative movement of said members changes the width but not the direction of said spray.

Preferably, the device comprises means for recirculating liquid received by the collecting means as feed liquid to the spray means.

Since the feed rate to the spray means determines the dosage rate, variation in amount of the spray interrupted by the masking arrangement does not in itself vary the dosage rate produced by the spray passed by the masking arrangement; and since the amount of spray passed by the masking arrangement can be varied, the area to be sprayed can be controlled by suitable choice of that amount.

The masking arrangement may comprise a fixed part in relation to which said members are displaceable, said fixed part comprising an aperture a greater or lesser part of which can be covered by said members thereby to vary the amount of spray interrupted by the masking arrangement. The fixed part may be in the form of a housing for the spray means; the housing having said aperture to permit egress 81 spray from the spray means; and said members may be mounted on a housing part preferably a detachable cover part; and preferably they are relatively movable between a position in which they completely close the aperture and a position in which they leave the aperture completely open. In this case, the aperture size would determine the maximum amount of the spray that could be passed by the masking arrangement. Preferably, said members are in the form of part annular walls.

The device of the present invention may readily be constructed of a size to render it portable; and, in this case, the reservoir may be a container which the user can carry with him, e.g. a so-called "back-pack".

Preferably, the device comprises a carrying handle comprising a portion to be gripped by the hand, and is constructed so as to be substantially balanced about the hand grip in use of the device.

The delivery of the liquid to the spray means and, more particularly, the circulation of the liquid, may be achieved by a fluid or electrically driven pump or screw; and the collecting device may comprise a sump to receive the liquid collected thereby, and the sump provided with two access points for connection to the reservoir of the liquid so that the sump can receive liquid from the reservoir through one of the connections and can bleed air to the reservoir through the other of the connections to maintain a constant level of liquid in the sump; the pump or screw being in communication with the sump to draw its supply of liquid therefrom. Preferably, the sump is formed with a restricted opening for interrupted liquid in order to prevent egress of liquid therethrough from the sump.

The collecting means alternatively may comprise a float valve to control liquid level and have one access point for connection to the reservoir.

The spray means may comprise a rotating disc driven by a suitable motor, preferably an electric one, which may also be used to drive the pump or screw as the case may be. In the latter case, the screw may be integral with the disc.

The electric motor and/or the electrically driven pump as the case may be may be powered by battery, which is preferably carried in the handle.

The disc is preferably dished and formed with a peripheral annular flange; and it is also preferred that the dished disc be grooved or slotted on the face of the disc to receive the liquid, with the grooves or slots passing at an angle to a radius, preferably 45° to a radius; that the peripheral edge of the dish be grooved or slotted with substantially radially arranged grooves or slots, and that the surface of the annular flange contiguous with the peripheral edge of the dish, be grooved or slotted with the grooves or slots substantially radially arranged. Preferably, the grooves or slots form a "saw-tooth" in section.

In a presently preferred disc, the grooves or slots are formed all round the disc; and it has been found that they ensure an even distribution of droplets in the spray produced by the disc.

The present invention also provides liquid spraying apparatus comprising a spraying device according to the present invention and a reservoir of liquid therefor.

The apparatus may be mounted on a wheeled carriage and thus be rendered mobile.

By means of the present invention, good control of spread and uniformity of deposition can be achieved. Further, by use of the presently preferred disc the droplet size can be controlled to avoid unduly small drops, which are easily displaced by extraneous influences such as wind. In fact, the droplet size can be kept within the limits suitable for specific applications, for example for herbicide applications deposit sizes are controlled to 250 to 500 microns. This further promotes control of spread and uniformity of deposition.

The present invention will now be described, by way of example only, with reference to the accompanying drawings, in which:—

Figure 1 is a sectional elevation in diagrammatic form of an embodiment of the present invention;

Figure 2 is a plan view from below of a cover part of the embodiment of Figure 1;

Figure 3 is a plan view of a fragment of a part used in the embodiment of Figure 1 shown on an enlarged scale, and

Figure 4 is a plan in diagrammatic form, with detail omitted, showing spray patterns produced by the embodiment of Figures 1 to 3.

Referring now to the drawings, the embodiment comprises a means for forming a spray of droplets of a liquid comprising a rotatable disc 1 and motor 3, being in this instance an electric motor, supported on a cylindrical housing 5 and on the shaft 7 of which the disc is mounted for rotation with the shaft.

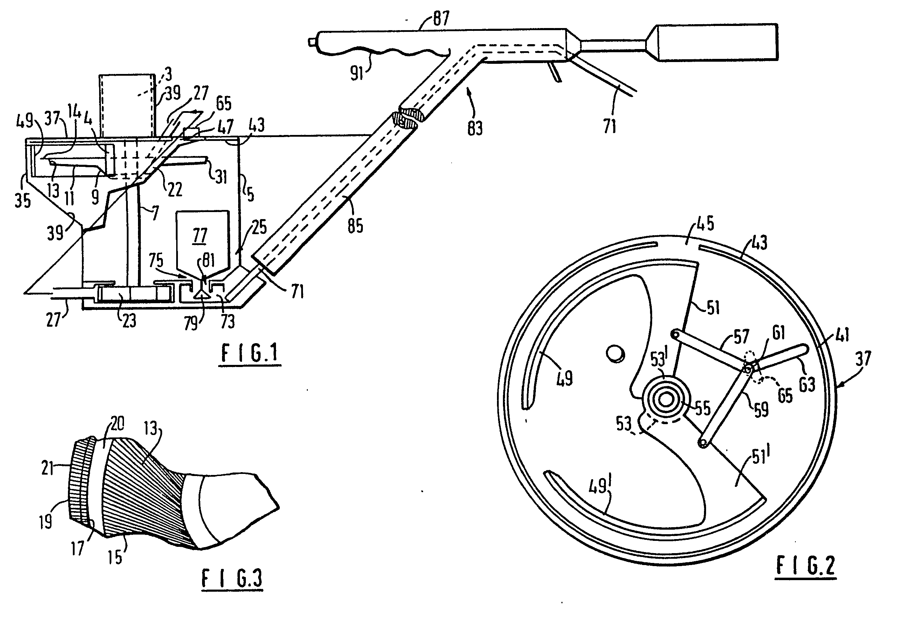

The disc is dished to form an inclined annular wall 9, and an annular radially extending peripheral flange 11 with the latter having an annular peripheral wall 13 formed with a radially extending lip 14. The upper surface of flange 11 is grooved as shown in Figure 3 with the grooves 15 lying on a line substantially at 45° to a radius. The upper peripheral edge 17 of the dish, i.e. the upper edge of annular wall 13, is also grooved or slotted as is the peripheral lip 14 on the surface 19 thereof contiguous with the peripheral edge 17 of the dish; the grooves or slots 20 and 21 respectively in the peripheral edge 17 and the peripheral lip 14 lying on a substantially radial line. The grooves 15, 20 and 21 pass entirely round the disc and in transverse section are of "saw-tooth" shape.

The embodiment further comprises a feed means for delivering liquid onto the floor 22 of the disc; the feed means comprising a pump 23 drawing the liquid from a sump 25, and a feed pipe 27 terminating above the floor of the disc, through which the pump pumps the liquid from the sump to deliver it onto the floor of the disc. Conveniently, the pump impeller is mounted on the shaft of the motor to lie disposed in the sump.

On rotation of the disc, the liquid delivered thereonto is broken up into droplets and the droplets are flung under centrifugal action from the radially outermost edge 31 of the peripheral lip to form a spray extending over an arc of 360°; the droplets forming the spray lying in substantially the same horizontal plane on leaving the edge 31.

The housing comprises a cylindrical wall 35 and the latter supports at its upper end (as seen in Figure 1) a cover member 37 comprising a housing 39 for the electric motor; and the cover member comprises a peripheral shoulder 41 forming a depending flange 43 which fits tightly into the top end of the cylindrical wall 35 (as viewed in Figure 1). The shoulder is formed with a notch 45 and the cylindrical wall with a complementary upstanding lug 47 to enter the notch to prevent rotation of the cover member relatively to cylindrical wall 35 when the cover is fitted in place.

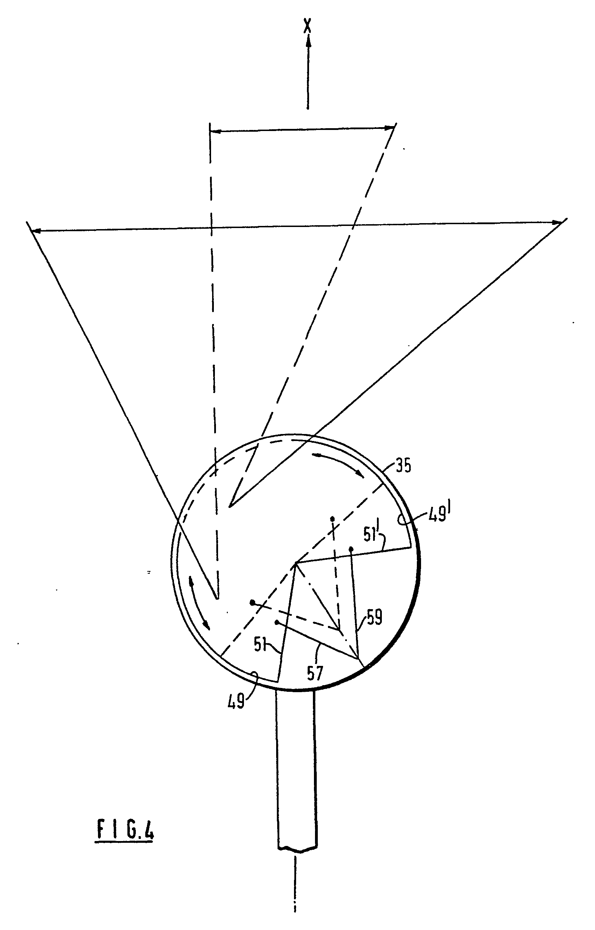

The housing 5 surrounds the disc and is constituted to form a masking arrangement for interrupting the spray over an adjustable arc. For this purpose, it comprises an aperture 33 formed in the cylindrical wall 35 of the housing so that spray from the disc is directed thereat, the aperture extending over an arc of substantially 120°, and a pair of part annular wall members (49, 49¹) each extending over an arc of somewhat more than 90°. The two members each comprise, at one end thereof, a radius arm (51, 51¹) terminating at the radially inward end (as seen in Figure 2) in an "eye" (53, 53¹) rotatably received on a boss 55 formed integrally with the cover member to surround the shaft of the motor. The two wall members are respectively pivotally connected to one end of levers 57, 59, which at their remote ends are pivoted to a pin 61 passing through a radial slot 63 formed in the cover to project thereabove. The projecting portion of the pin carries a finger press knob 65 by which the pin can be moved in the slot. As the pin is moved to the position shown in Figure 2 radially inwardly it causes the levers 57, 59 to splay outwardly and push the radius arms to rotate them on the boss 55 and thereby move the remote ends thereof towards one another. In this movement the walls pass progressively across the aperture 33 in the cylindrical wall 35 to reduce the width of the spray. However, because both gates move together and by an equal amount the distribution of the spray about the forward line of movement indicated by arrow "X" in Figure 4 remains symmetrical with regard to that line. Accordingly, there is no change in the direction of the spray, which could affect the dosage rate, i.e. the amount of fluid falling on a given area of ground. A change of direction can only be effected by changing the forward direction of the entire device. In the illustrated embodiment, the wall members can be moved nearly to close the aperture; and by a reverse movement, they can leave the entirety of the aperture exposed.

The housing surmounts a collecting surface 39 of truncated part cone shape, for liquid interrupted by the housing and together with the sump forms collecting means for that liquid.

The sump, in this instance, is connected to a reservoir (not shown) of the liquid; the reservoir being provided with an outlet pipe 71 connecting the reservoir to an inlet chamber 73 in the sump to deliver liquid thereto. The sump contains a float valve 75 comprising a float 77 and a valve member 79 housed within the inlet chamber so that the liquid rises above the liquid level of the sump inlet chamber, the float rises to raise the valve member and close the outlet port of the chamber to prevent further ingress of liquid, and as the liquid then falls, the float descends to lower the valve member to re-open the outlet port to admit more liquid from the reservoir. Thus, for any given setting of the masking arrangement, a substantially constant level is maintained in the device.

The embodiment as described may be made sufficiently small readily to permit it to be carried manually and, for this purpose, it comprises a handle, generally indicated at 83, in the form of a first tube 85, through which pipe 71 and electrical wiring (not shown) for the motor are led, and a second tube 87 made integral with tube 85 and serving as a hand-grip 91 so that the device can be carried by the operator with his arm extended straight down. The end of the tube remote from the spraying unit, is formed to house a battery to drive the electric motor; and with the device in use, the device is substantially balanced about the location of the handgrip so that the applying unit naturally stays at the level it is held by the operator.

In use of the device of the embodiment, the liquid is pumped at a constant rate by the pump onto the floor of the disc to form the spray as described above; and the masking arrangement is adjusted to spray an area of the surface concerned. The disc gives rise to a substantially uniform spray and variation of the aperture size of the masking arrangement therefore does not vary the dosage rate of liquid falling on any given area, i.e. varying the area of the aperture that is masked merely varies the area sprayed at the given dosage rate.

Since different surfaces may need different dosage rates, preferably the feed line includes a restrictor and/or an adjustable valve to set the feed rate required in a given application.

The illustrated device by spraying over a selected arc and by droplet control and by use of a constant feed-rate for a given application, is able to give a substantial uniformity of deposition over the chosen area. The droplet size can be kept within the limits of those chosen for a specific application and a rate of application of between 10 to 40 liters per hectare is readily achievable. The feed line 27 may comprise a restrictor or adjustable valve, diagrammatically indicated at 93; and by use of different restrictors or of the adjustable valve, feed rates possible can be varied.

## Claims

1. A liquid spraying device comprising means for forming a spray of droplets of the liquid, means for delivering liquid to said spray forming means at a predetermined rate, and a masking arrangement positionable to interrupt said spray, said masking arrangement being adjustable to interrupt a greater or lesser part of said spray, characterised in that said masking arrangement comprises two members (49, 49$^1$) relatively movable away from and towards one another to interrupt a greater or lesser part of the spray respectively, and means (51, 51$^1$, 55, 57, 59, 61, 63, 65) for so relatively moving said members such that they are moved together and by the same amount so that a relative movement of said members changes the width but not the direction of said spray.

2. A device as claimed in Claim 1, comprising means (25, 35, 39) for collecting any part of said spray interrupted by said masking arrangement and means (23, 27) for re-circulating liquid received by said collecting means as feed liquid to the spray forming means.

3. A device as claimed in Claim 1, wherein said masking arrangement comprises a fixed part (35) in relation to which said members are displaceable, said fixed part comprising an aperture (33) and said members (49, 49$^1$) being relatively movable between a position in which said members (49, 49$^1$) completely close said aperture (33) and a position in which said members (49, 49$^1$) leave said aperture completely open.

4. A device as claimed in Claim 1, comprising a carrying handle (83) including a portion (91) to be gripped by the hand, and being constructed so as to be substantially balanced about the hand grip (91) in use of the device.

5. A device as claimed in Claim 2, wherein said collecting means comprises a float valve (75) to control liquid level and has one access point for connection to a reservoir for said liquid.

6. A device as claimed in Claim 1, wherein said spray forming means comprises a rotatable disc (1) drivable by a motor (3), said motor (3) being drivably connected to liquid displacing means (23) for displacing liquid to the spray forming means.

7. A device as claimed in Claim 6, wherein the disc (1) is dished and formed with a peripheral annular flange (11), grooves or slots (15) being provided on the face of the disc to receive liquid, and the grooves or slots (15) passing at an angle to a radius.

8. A device as claimed in Claim 6, comprising feed means (3, 23, 27) for delivering liquid into said disc, and restrictor means (93) provided in said feed means for regulating the feed rate of said liquid.

## Patentansprüche

1. Vorrichtung zum Versprühen einer Flüssigkeit mit einer Einrichtung zur Bildung eines Sprühnebels aus Tröpfchen der Flüssigkeit, mit einer Einrichtung zum Abgeben der Flüssigkeit an die einen Sprühnebel bildende Einrichtung mit einem vorher festgelegten Mengenstrom und mit einer Abdeckanordnung, die positionierbar ist, um den Sprühnebel aufzuhalten und die einstellbar ist, um einen größeren oder kleineren Teil des Sprühnebels aufzuhalten, dadurch gekennzeichnet, daß die Abdeckanordnung zwei relativ voneinander weg und aufeinander zu bewegbare Elemente (49, 49¹), um einen größeren bzw. kleineren Teil des Sprühnebels aufzuhalten, und Einrichtungen (51, 51¹, 55, 57, 59, 61, 63, 65) aufweist, um die Elemente relativ so zu bewegen, daß sie zusammen und um den gleichen Betrag derart bewegt werden, daß eine Relativbewegung der Elemente die Breite, jedoch nicht die Richtung des Sprühebels ändert.

2. Vorrichtung nach Anspruch 1, mit einer Einrichtung (25, 35, 39) zum Sammeln jedes Teils des Sprühnebels, der von der Abdeckanordnung aufgehalten wird, und mit einer Einrichtung (23, 27) für die erneute Umwälzung von Flüssigkeit, die von der Sammeleinrichtung erhalten wird, als Beschickungsflüssigkeit zu derden Sprühnebel bildende Einrichtung.

3. Vorrichtung nach Anspruch 1, bei welcher die Abdeckanordnung ein feststehendes Teil (35) aufweist, in Relation zu welchem die Elemente verschiebbar sind, wobei das festestehende Teil eine Öffnung (33) aufweist und die Elemente (49, 49¹) zwischen eine Stellung, in welcher sie die Öffnung (33) vollständig schließen, und einer Stellung, in welcher sie die Öffnung vollständig offen lassen, relativ verschiebbar sind.

4. Vorrichtung nach Anspruch 1, mit einem Traggriff (83), der einen Abschnitt (91) für das Greifen mit der Hand aufweist und der so gebaut ist, daß er bei Benutzung der Vorrichtung um den Handgriff (91) herum im wesentlichen ausbalanciert ist.

5. Vorrichtung nach Anspruch 2, bei welcher die Sammeleinrichtung ein Schwimmerventil (75) zur Steuerung des Flüssigkeitspegels aufweist und einen Zugangspunkt für die Verbindung mit einem Speicher für die Flüssigkeit hat.

6. Vorrichtung nach Anspruch 1, bei welcher die den Sprühnebel bildende Einrichtung eine drehbare Scheibe aufweist, die von einem Motor (3) antriebbar ist, wobei der Motor (3) in Antriebsverbindung mit einer Flüssigkeitsverdrängungseinrichtung (23) steht, um Flüssigkeit zu der den Sprühnebel bildenden Einrichtung zu verdrängen.

7. Vorrichtung nach Anspruch 6, bei welcher die Scheibe (1) gewölbt und mit einem Umfangsringflansch (11) versehen ist, wobei Nuten oder Schlitze (15) auf der Fläche der Scheibe für die Aufnahme von Flüssigkeit vorgesehen sind und sich mit einem Winkel zu einem Radius erstrekken.

8. Vorrichtung nach Anspruch 6 mit einer Beschickungseinrichtung (3, 23, 27) zum Zuführen von Flüssigkeit in die Scheibe und mit einer Drosseleinrichtung (93), die in der Beschickungseinrichtung zur Regulierung des Mengenstroms der Flüssigkeit vorgesehen ist.

## Revendications

1. Dispositif de pulvérisation d'un liquide, comportant des moyens pour former un brouillard de gouttelettes du liquide, des moyens pour fournir du liquide à un débit prédéterminé auxdits moyens de formation de brouillard et un arrangement de masquage pouvant être positionné pour arrêter ledit brouillard, ledit arrangement de masquage étant réglable pour arrêter une partie plus ou moins grande dudit brouillard, caractérisé en ce que ledit arrangement de masquage comporte deux éléments (49, 49¹) déplaçables l'un par rapport à l'autre pour s'éloigner et se déplacer et arrêter respectivement une partie plus ou moins grande du brouillard, et des moyens (51, 51¹, 55, 57, 59, 61, 63, 65) pour déplacer lesdits éléments l'un par rapport à l'autre de manière qu'ils soient déplacés ensemble et avec la même amplitude, de telle sorte qu'un mouvement relatif desdits éléments fasse varier la largeur mais non la direction dudit brouillard.

2. Dispositif selon la revendication 1, comportant des moyens de réception (25, 35, 39) pour recueillir toute partie dudit brouillard arrêté par ledit arrangement de masquage et des moyens (23, 27) pour recycler le liquide recueilli par lesdits moyens de réception en tant que liquide envoyé aux moyens de formation de brouillard.

3. Dispositif selon la revendication 1, dans lequel ledit arrangement de masquage comporte une partie fixe (35) par rapport à laquelle lesdits éléments sont déplaçables, ladite partie fixe présentant une ouverture (33) et lesdits éléments (49, 49¹) étant déplaçables suivant un mouvement relatif entre une position dans laquelle lesdits éléments (49, 49¹) ferment complètement ladite ouverture et une position dans laquelle lesdits éléments (49, 49¹) laissent ladite ouverture complètement ouverte.

4. Dispositif selon la revendication 1, comportant une poignée de transport (83) qui comprend une partie (91) destinée à être saisie à la main et qui est construite de manière à être sensiblement équilibrée autour de la partie de prise à la main (91) pendant l'utilisation du dispositif.

5. Dispositif selon la revendication 2, dans lequel lesdits moyens de réception comportent un robinet à flotteur (75) pour commander le niveau du liquide et présentent un point d'accès pour le raccordement à un réservoir pour ledit liquide.

6. Dispositif selon la revendication 1, dans lequel lesdits moyens de formation de brouillard comportent un disque tournant (1) pouvant être entraîné par un moteur (3), ledit moteur (3) étant en liaison d'entraînement avec des moyens de transport de liquide (23) pour envoyer du liquide aux moyens de formation de brouillard.

7. Dispositif selon la revendication 6, dans lequel le disque (1) est en cuvette et constitué avec un rebord périphérique annulaire (11) des rainures ou des fentes (15) étant prévues sur la surface frontale du disque pour recevoir du liquide, les rainures en fentes (15) faisant un certain angle avec un rayon.

8. Dispositif selon la revendication 6, comportant des moyens d'alimentation (3, 23, 27) pour envoyer du liquide dans ledit disque et des moyens de limitation (93) prévus dans lesdits moyens d'alimentation pour régler le débit d'alimentation dudit liquide.

FIG.1

FIG.2

FIG.3

FIG.4